(19) **Europäisches Patentamt / European Patent Office / Office européen des brevets**

(11) **EP 4 625 007 A1**

(12) **EUROPEAN PATENT APPLICATION**
published in accordance with Art. 153(4) EPC

(43) Date of publication:
01.10.2025 Bulletin 2025/40

(21) Application number: 23907617.7

(22) Date of filing: 15.12.2023

(51) International Patent Classification (IPC):
G02B 5/30 (2006.01)    G02F 1/1335 (2006.01)
G09F 9/30 (2006.01)    G02B 1/02 (2006.01)
G02B 1/11 (2015.01)    G02B 1/18 (2015.01)
G02B 1/14 (2015.01)

(52) Cooperative Patent Classification (CPC):
G02B 1/02; G02B 1/11; G02B 1/14; G02B 1/18;
G02B 5/30; G02F 1/1335; G09F 9/30

(86) International application number:
PCT/KR2023/020744

(87) International publication number:
WO 2024/136331 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.12.2022 KR 20220177944

(71) Applicant: SAMSUNG SDI CO., LTD.
Yongin-si, Gyeonggi-do 17084 (KR)

(72) Inventors:
• HONG, Hyun Ah
  Suwon-si Gyeonggi-do 16678 (KR)

• LEE, Dae Gyu
  Suwon-si Gyeonggi-do 16678 (KR)
• CHO, Jang Hyun
  Suwon-si Gyeonggi-do 16678 (KR)
• LEE, Eun Hwa
  Suwon-si Gyeonggi-do 16678 (KR)
• CHO, Seong Heun
  Suwon-si Gyeonggi-do 16678 (KR)
• SEO, Jin Ah
  Suwon-si Gyeonggi-do 16678 (KR)

(74) Representative: Michalski Hüttermann & Partner
Patentanwälte mbB
Kaistraße 16A
40221 Düsseldorf (DE)

(54) **POLARIZING PLATE AND OPTICAL DISPLAY DEVICE**

(57) Provided are a polarizing plate and an optical display device including the polarizing plate, the polarizing plate comprising a polarizer, and a first optical functional layer and a second optical functional layer sequentially stacked on one surface of the polarizer, wherein the first optical functional layer includes anisotropic particles, the anisotropic particles include needle-shaped particles, the needle-shaped particles are oriented in the in-plane direction of the first optical functional layer, the average value of the orientation angles formed by the light absorption axis of the polarizer and the longitudinal direction of the needle-shaped particles is -10° to +10° when the light absorption axis of the polarizer is 0°, the standard deviation of the orientation angles is 15° or lower, and the second optical functional layer includes a cured product of a composition containing an active energy ray-curable resin.

[FIG. 7]

EP 4 625 007 A1

## Description

[Technical Field]

The present invention relates to a polarizing plate and an optical display apparatus including the same.

[Background Art]

A liquid crystal display has a structure wherein a viewer-side polarizing plate, a liquid crystal panel, and a light source-side polarizing plate are sequentially stacked.

For the liquid crystal display, it may be desirable to have high visibility and brightness at a lateral side thereof. In order to provide high visibility and high brightness, the viewer-side polarizing plate may include a visibility-enhancing layer, which includes two resin layers having different indexes of refraction and has a pattern at an interface therebetween. However, it may be desirable to provide a polarizing plate capable of improving visibility even without such a visibility-enhancing layer.

The viewer-side polarizing plate is disposed at the outermost side of the liquid crystal display and is vulnerable to external impact. Thus, the viewer-side polarizing plate is required to have high hardness. For example, the viewer-side polarizing plate may have a pencil hardness of 2H or more.

The background technique of the present invention is disclosed in Korean Patent Laid-open Publication No. 10-2018-0047569 and the like.

[Disclosure]

[Technical Problem]

It is one object of the present invention to provide a polarizing plate capable of improving visibility even without a pattern, for example, a visibility-enhancing pattern, or a visibility-enhancing layer having a pattern.

It is another object of the present invention to provide a polarizing plate that has good hardness.

It is a further object of the present invention to provide a polarizing plate that achieves thickness reduction.

It is yet another object of the present invention to provide a polarizing plate that suppresses generation of curls.

[Technical Solution]

One aspect of the present invention relates to a polarizing plate.

1. The polarizing plate includes: a polarizer; and a first optically functional layer and a second optically functional layer sequentially stacked in the stated order on one surface of the polarizer, wherein the first optically functional layer contains anisotropic particles including acicular particles, the acicular particles being aligned in an in-plane direction of the first optically functional layer; assuming that a light absorption axis of the polarizer is 0°, orientation angles of the acicular particles defined between longitudinal directions of the acicular particles and the light absorption axis of the polarizer have an average value of -10° to +10° and a standard deviation of 15° or less; and the second optically functional layer includes a cured product of a composition comprising an actinic radiation curable resin.

2. In 1, the first optically functional layer may be a contrast ratio or brightness-enhancing layer.

3. In 1 to 2, each of upper and lower surfaces of the second optically functional layer may be a flat surface totally.

4. In 1 to 4, the acicular particles may be acicular microparticles.

5. In 1 to 4, the acicular particles may be formed of at least one selected from among titanium oxide, zirconium oxide, zinc oxide, calcium carbonate, Boehmite, aluminum borate, calcium silicate, magnesium sulfate, magnesium sulfate hydrate, and potassium titanate.

6. In 1 to 5, the acicular particles may have an average aspect ratio of 5 to 60.

7. In 1 to 6, the acicular particles may be present in an amount of 1% by weight (wt%) to 30 wt% in the first optically functional layer.

8. In 1 to 7, the first optically functional layer may include a matrix impregnated with the acicular particles.

9. In 8, the matrix may be an adhesive or non-adhesive matrix.

10. In 8 to 9, the matrix may have a glass transition temperature of -10°C or less and a storage modulus at 25°C of $1 \times 10^{-3}$ MPa to $9 \times 10^{-1}$ MPa.

11. In 1 to 10, the actinic radiation curable resin may include a vinyl group or (meth)acrylate group-containing resin.

12. In 1 to 11, a difference in index of refraction between the matrix in the first optically functional layer and the second optically functional layer (index of refraction of the matrix in the first optically functional layer - index of refraction of the second optically functional layer) may be 0.1 or less.

13. In 1 to 12, the second optically functional layer may have a smaller thickness than the first optically functional layer.

14. In 1 to 13, the polarizing plate may include at least one selected from among a protective layer, an adhesive layer, a bonding layer, a functional layer, and a functional coating layer.

15. In 14, each of the functional film and the functional coating layer may be an anti-glare layer, an anti-reflection layer, an ultra-low reflectivity layer, a low refractivity layer, a high refractivity layer, or an anti-fingerprint layer.

Another aspect of the present invention relates to an optical display apparatus.

The optical display apparatus includes the polarizing plate according to the present invention.

[Advantageous Effects]

The present invention provides a polarizing plate capable of improving visibility even without a pattern, for example, a visibility-enhancing pattern, or a visibility-enhancing layer having a pattern.

The present invention provides a polarizing plate that has high hardness.

The present invention provides a polarizing plate that achieves thickness reduction.

The present invention provides a polarizing plate that suppresses generation of curls.

[Description of Drawings]

FIG. 1 is TEM images of acicular particles according to the present invention.

FIG. 2 is a schematic sectional view of an acicular particle.

FIG. 3 is a schematic diagram showing a distribution of angles of longitudinal directions of acicular particles with respect to a reference plane, assuming that the light absorption axis of the polarizer is placed at 90° with respect to the reference plane.

FIG. 4 is an image showing acicular particles in a first optically functional layer according to one embodiment

FIG. 5 is a diagram showing a distribution of orientation angles of the acicular particles in the first optically functional layer.

FIG. 6 is a perspective view of a first optically functional layer according to one embodiment of the present invention.

FIG. 7 is a perspective view of a first optically functional layer and a second optically functional layer according to one embodiment of the present invention.

FIG. 8 to FIG. 12 are sectional views of polarizing plates according to embodiments of the present invention.

[Best Mode]

Hereinafter, embodiments of the present invention will be described in detail with reference to the accompanying drawings such that the present invention can be easily implemented by those skilled in the art. It should be understood that the present invention may be embodied in different ways and is not limited to the following embodiments.

The terminology used herein is for the purpose of describing exemplary embodiments and is not intended to limit the scope of the invention. Herein, the singular forms "a," "an," and "the" are intended to include the plural forms as well, unless the context clearly indicates otherwise.

In the drawings, portions irrelevant to the description will be omitted for clarity. Like components will be denoted by like reference numerals throughout the specification. Although lengths, thicknesses or widths of various components may be exaggerated in the drawings for description of the invention, the present invention is not limited thereto.

Herein, spatially relative terms such as "upper" and "lower" are defined with reference to the accompanying drawings. Thus, it will be understood that "upper surface" can be used interchangeably with "lower surface" and vice versa. When an element is referred to as being formed "directly on," "immediately on," or "to directly adjoin" another element, there are no intervening element(s) therebetween.

Herein, "in-plane retardation (Re)" is a value measured at a wavelength of 550 nm, as calculated according to Equation A:

$$< \text{Equation A}>$$

$$Re = (nx - ny) \times d$$

(in the Equation A, nx and ny are the indexes of refraction of a protective layer in the slow axis direction and the fast axis direction thereof at a wavelength of 550 nm, respectively, and d is the thickness (unit: nm) of the protective layer).

Herein, "(meth)acryl" refers to acryl and/or methacryl.

Herein, "index of refraction" may be a value measured at a wavelength of 380 nm to 780 nm, specifically at 550 nm.

Herein, "light transmittance" may be a value measured at a wavelength of 380 nm to 780 nm, specifically at 550 nm.

Herein, "storage modulus" of a matrix is measured on a specimen at 25°C while heating the specimen from 0°C to 100°C at 10°C/min using a storage modulus meter (Advanced Rheometric Expansion System (ARES), TA Instruments). Here, the specimen is prepared by depositing a composition for the matrix onto a release film, drying the composition at 95°C for 4 min to form matrices each having a thickness of 50 μm, stacking the matrices to a thickness of 500 μm, cutting a laminate of the matrices into a circular specimen having a diameter of 8 mm.

Herein, "glass transition temperature" of a matrix is measured on 15 mg of the matrix (on a 6 mm Al Pan) while heating a specimen to 180°C at 20°C/min in a nitrogen atmosphere (flow rate: 50 mL/min), cooling the specimen to -100°C, and heating the specimen to 100°C at 10°C/min using a Discovery (TA Instruments Inc.). The matrix may be prepared by the method described above.

As used herein to represent a specific numerical range, "X to Y" means "X≤ and ≤Y".

The polarizing plate according to the present invention provides an effect of improving visibility even without a pattern or a visibility-enhancing layer having the pattern at an interface thereof. The polarizing plate according to the present invention has good hardness. The polarizing plate according to the present invention achieves thickness reduction. The polarizing plate according to the present invention suppresses generation of curls. In addition, the polarizing plate according to the present invention suppresses generation of cracks on a surface thereof.

The polarizing plate according to the present invention includes: a polarizer; and a first optically functional layer and a second optically functional layer sequentially stacked in the stated order on one surface of the polarizer, wherein: the first optically functional layer includes anisotropic particles including acicular particles, the acicular particles being aligned in an in-plane direction of the first optically functional layer; assuming that a light absorption axis of the polarizer is 0°, orientation angles of the acicular particles defined between longitudinal directions of the acicular particles and the light absorption axis of the polarizer have an average value of -10° to +10° and a standard deviation of 15° or less; and the second optically functional layer includes a cured product of a composition comprising an actinic radiation curable resin.

Herein, a polarizing plate according to one embodiment will be described.

The polarizing plate includes a polarizer, a first optically functional layer, and a second optically functional layer. The first optically functional layer is distinguished from the second optically functional layer in terms of the presence of anisotropic particles, thickness, composition and/or functions.

The polarizing plate may have a light transmittance of 95% or more, for example, 96% to 100%. Within this range, the polarizing plate can be used as a viewer-side polarizing plate.

## First optically functional layer

The first optically functional layer may be stacked on a light exit surface of the polarizer. Here, the light exit surface refers to a surface through which light emitted from a backlight unit and having reached the polarizer exits from the polarizer. The first optically functional layer includes anisotropic particles.

The anisotropic particles include acicular particles. According to the present invention, the first optically functional layer includes acicular particles among various kinds of anisotropic particles. The present invention uses properties of the acicular particles that secure particularly good effects in improvement in visibility and contrast ratio by providing different degrees of diffusing light emitted from a backlight unit, for example, from the polarizer, depending upon the index of refraction and orientation direction of the particles.

The acicular particles are aligned in the in-plane direction of the first optically functional layer; and assuming that the light absorption axis of the polarizer is 0°, orientation angles of the acicular particles defined between longitudinal directions of the acicular particles and the light absorption axis of the polarizer have an average value of -10° to +10° and a standard deviation of 15° or less. The second optically functional layer includes a cured product of a composition comprising an actinic radiation curable resin. Within the ranges of the average value and standard deviation, the polarizing plate can improve contrast ratio and/or brightness on a front side and a lateral side thereof. Accordingly, the first optically functional layer may act as a contrast ratio, visibility and/or brightness-enhancing layer.

As described below, each of upper and lower surfaces of the first optically functional layer is flat totally and is not patterned. Nevertheless, the first optically functional layer can improve visibility, contrast ratio and/or brightness at the front and lateral sides by containing the acicular microparticles while satisfying the average value and standard deviation of the orientation angles according to the present invention. As a result, the polarizing plate can improve manufacturing processability while achieving thickness reduction through elimination of an optical pattern or a patterned layer.

Next, the acicular particles will be described in detail.

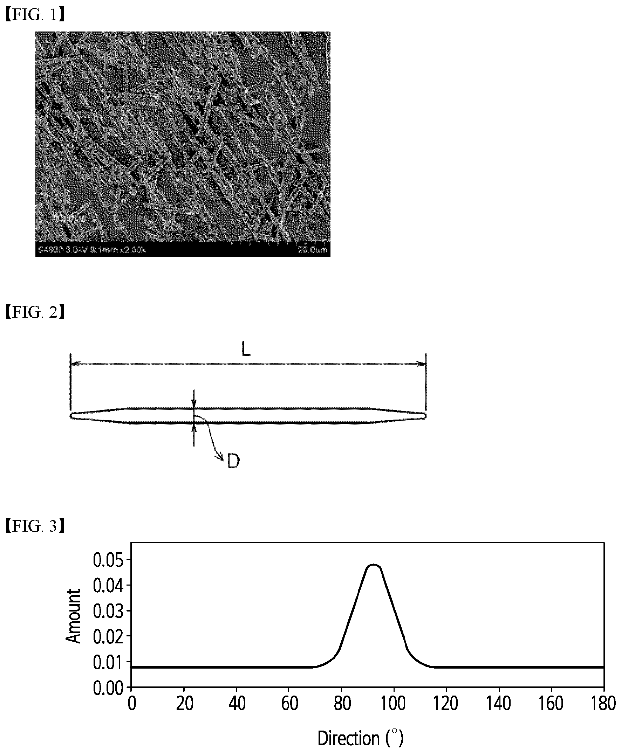

FIG. 1 is TEM images of acicular particles according to one embodiment of the present invention. FIG. 2 is a schematic sectional view of an acicular particle.

The acicular particles may have a length L and a diameter D, which is not uniform over the entire length L and gradually decreases towards both ends of the acicular particle. The acicular particles with an uneven thickness exhibit optical anisotropy, whereby incident light received from the polarizer can travel in different directions while passing through the acicular particles.

FIG. 2 shows an acicular particle having a diameter gradually decreasing from the center thereof to both ends thereof. However, it should be understood that the present invention is not limited thereto and the acicular particles may have a diameter that is uniform from the center thereof to one end thereof while gradually decreasing from the center to the other end thereof, depending on a method of preparing the acicular particles.

The acicular particles may be acicular microparticles having a length L of a micrometer-scale value. Here, "micrometer-scale value" means that the length L is 1 $\mu$m or more. With this structure, the acicular microparticles allow easy adjustment of the average value and standard deviation of the orientation angles thereof and thus can assist in improvement in contrast ratio and brightness. However, acicular nanoparticles having a nanometer-scale length L (for example, nano-rods, acicular nanoparticles) do not allow easy orientation in a desired direction, thereby making it difficult to achieve the effects of the invention. If an excess of the acicular nanoparticles is present to achieve the same effects as the acicular microparticles, there can be a problem of deterioration in optical properties, such as light transmittance, haze, and the like.

In one embodiment, the acicular particles may have a length L of 10 $\mu$m to 50 $\mu$m, for example, 10 $\mu$m, 15 $\mu$m, 20 $\mu$m, 25 $\mu$m, 30 $\mu$m, 35 $\mu$m, 40 $\mu$m, 45 $\mu$m, 50 $\mu$m, 10 $\mu$m to 30 $\mu$m, or 15 $\mu$m to 28 $\mu$m. Within this range, the acicular particles can be easily aligned in a desired direction, thereby assisting in improvement in contrast ratio and brightness.

In one embodiment, the acicular particles may have a cross-section diameter D of 0.5 $\mu$m to 2 $\mu$m, specifically 0.5 $\mu$m, 0.6 $\mu$m, 0.7 $\mu$m, 0.8 $\mu$m, 0.9 $\mu$m, 1 $\mu$m, 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2.0 $\mu$m, or 1 $\mu$m to 2.0 $\mu$m. Within this range, the acicular particles can provide lateral diffusion through increase in aspect ratio thereof. Here, "cross-section diameter" is a diameter of the acicular particles in sectional view and may mean the maximum diameter of the acicular particles among diameters measured in cross-section.

In one embodiment, the acicular particles may have a circular or elliptical cross-section.

The acicular particles may have an average aspect ratio of 5 to 60. Within this range, the acicular particles can easily provide an effect of improving contrast ratio and brightness. For example, the acicular particles may have an average aspect ratio of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 10 to 50, or 10 to 18. Here, "average aspect ratio" refers to an average of aspect ratios of the acicular particles and "aspect ratio" refers to a length-to-maximum diameter ratio of each of the acicular particles.

The acicular particles are aligned at a predetermined orientation angle in an in-plane direction of the optically functional layer and the orientation angles of the acicular particles have an average value of -10° to +10° and a standard deviation of 15° or less. Here, "orientation angle" means an angle defined between the longitudinal direction of the acicular particle and the light absorption axis of the polarizer, assuming that the light absorption axis of the polarizer is 0°. A spherical particle, particularly an isotropic particle, which does not have a longitudinal direction, does not have an orientation angle.

According to the present invention, since the orientation angles of the acicular particles have an average value of -10° to +10° and a standard deviation of 15° or less, light emitted from the polarizer can travel in different directions through the acicular particles, thereby improving front/lateral contrast ratio and brightness. Accordingly, the first optically functional layer may be a contrast ratio and/or visibility-enhancing layer. The light absorption axis of the polarizer may be a machine direction (MD) of the polarizer.

Next, the average value and standard deviation of the orientation angles will be described with reference to FIG. 3, FIG. 4 and FIG. 5.

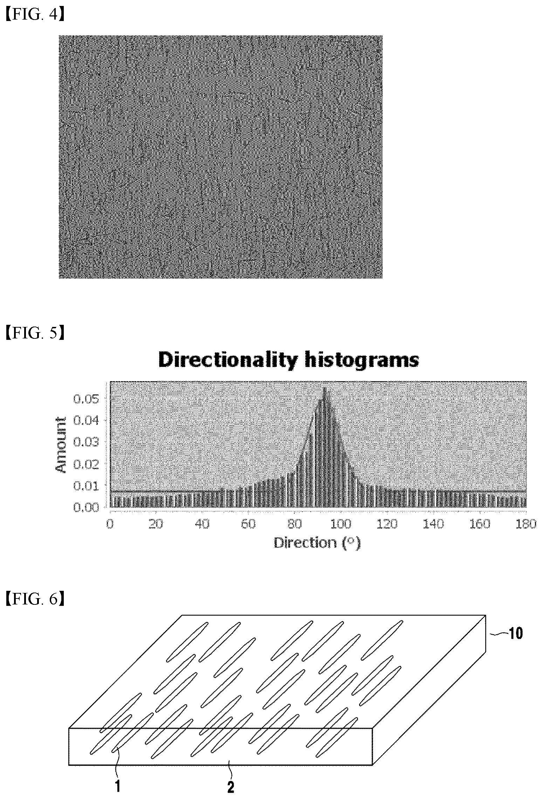

FIG. 3 is a schematic diagram showing a distribution of angles of the longitudinal directions of the acicular particles with respect to a reference plane, assuming that the light absorption axis of the polarizer is placed at 90° with respect to the reference plane. FIG. 4 is an image of acicular particles in a first optically functional layer according to one embodiment and FIG. 5 is a diagram showing a distribution of the orientation angles of the acicular particles in the first optically functional layer.

According to the present invention, the average value of the orientation angles of the acicular particles is obtained by calculating the average of the angles, followed by subtracting 90° from the calculated average. For example, when the calculated average is 80°, the average value of the orientation angles is -10° and, when the calculated average is 100°, the average value of the orientation angles is +10°. The standard deviation of the orientation angles may be calculated from the distribution of the angles by a typical method known in the art.

In one embodiment, the average value of the orientation angles may be -10°, -9.5°, -9°, -8.5°, -8°, -7.5°, -7°, -6.5°, -6°, -5.5°, -5°, -4.5°, -4°, -3.5°, -3°, -2.5°, -2°, -1.5°, -1°, - 0.5°, 0°, +0.5°, +1°, +1.5°, +2°, +2.5°, +3°, +3.5°, +4°, +4.5°, +5°,

+5.5°, +6°, +6.5°, +7°, +7.5°, +8°, +8.5°, +9°, +9.5°, or +10°, for example, -4.0° to +4.0°, specifically -2.5° to +2.5°. In addition, the standard deviation of the orientation angles may be, for example, 0°, 0.5°, 1°, 1.5°, 2°, 2.5°, 3°, 3.5°, 4°, 4.5°, 5°, 5.5°, 6°, 6.5°, 7°, 7.5°, 8°, 8.5°, 9°, 9.5°, 10°, 10.5°, 11°, 11.5°, 12°, 12.5°, 13°, 13.5°, 14°, 14.5°, 15°, 0° to 8.5°, or 5° to 8.5°. Within these ranges, the polarizing plate can achieve the effects of the present invention.

In one embodiment, at least 90%, for example, 95% to 100%, of the acicular particles may be aligned at an orientation angle of -10° and +10°. Within this range, the optically functional layer can provide uniform contrast ratio and improved visibility. Here, "%" means a weight ratio of the acicular particles aligned at an orientation angle of -10° to +10° to the total acicular particles in the first optically functional layer.

The acicular particles may have an index of refraction of 1.5 to 2.2, for example, 1.5, 1.6, 1.7, 1.8, 1.9, 2, 2.1, 2.2, 1.6 to 1.8, or 1.65 to 1.7. Within this range, the acicular particles can have a suitable index of refraction relative to a resin layer (or matrix) described below, thereby assisting in improvement in contrast ratio and visibility.

The acicular particles may be selected from among organic particles, inorganic particles, organic/inorganic particles, and the like. For example, the acicular particles may be formed of at least one selected from among metal oxides, such as titanium oxide (for example, $TiO_2$), zirconium oxide (for example, $ZrO_2$), and zinc oxide (for example, ZnO), metal compounds, such as calcium carbonate ($CaCO_3$), boehmite, aluminum borate (for example, $AlBO_3$), calcium silicate (for example, $CaSiO_3$, wollastonite), magnesium sulfate ($MgSO_4$), magnesium sulfate hydrate (for example, $MgSO_4 \cdot 7H_2O$), and potassium titanate (for example, $K_2Ti_8O_{17}$), inorganic particles, such as glass, and organic particles, such as synthetic resins, and the like. In one embodiment, the acicular microparticles may be formed of calcium carbonate to facilitate preparation thereof and achievement of the effects of the invention.

The acicular particles may be impregnated into the first optically functional layer without surface modification. However, surface modification of the acicular particles can further improve compatibility of the acicular particles with a matrix formed of an organic material described below and dispersibility of the acicular particles in the matrix to improve optical properties of the first optically functional layer without aggregation of the acicular particles, thereby facilitating achievement of the effects of the present invention. The acicular particles may be subjected to surface modification over 50% or more, for example, 60% to 100%, or 60% to 95% of the entire surface area thereof. Within this range, the acicular particles can have improved compatibility and dispersibility.

In one embodiment, the acicular particles may be subjected to surface modification with at least one selected from among a silane based compound, a surfactant, and oils. For example, the acicular particles may be subjected to surface treatment with a silane based compound having a (meth)acryloyloxy group or a (meth)acrylate group to have good compatibility with a matrix of a resin layer formed of an actinic radiation curable composition described below and good dispersibility in the matrix.

The silane based compound having the (meth)acryloyloxy group or the (meth)acrylate group may include at least one selected from among 3-(meth)acryloyloxypropylmethyldimethoxysilane, 3-(meth)acryloyloxypropyltrimethoxysilane, 3-(meth)acryloyloxypropylmethyldiethoxysilane, 3-(meth)acryloyloxypropyl triethoxysilane, and 3-(meth)acryloyloxypropyltrimethoxysilane, for example, 3-(meth)acryloyloxypropyltrimethoxysilane and/or 3-(meth)acryloyloxypropyl triethoxysilane.

The acicular particles may be present in an amount of 90% or more, for example, 95% to 100%, or 100%, based on the total amount of the anisotropic particles in the first optically functional layer. Within this range, the effects of the present invention can be easily achieved. Here, "%" means a weight ratio of the acicular particles to the total anisotropic particles in the first optically functional layer.

The anisotropic particles, for example, the acicular particles, may be present in an amount of 1 wt% to 30 wt%, for example, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, 30 wt%, 3 wt% to 15 wt%, or 4 wt% to 10 wt%, in the first optically functional layer. Within this range, the polarizing plate can achieve improvement in contrast ratio and brightness. However, an excess of the acicular particles can cause increase in haze.

The first optically functional layer may include the acicular particles alone. Alternatively, the acicular particles may be impregnated into the matrix to secure coupling between the polarizer and a protective layer in the polarizing plate, mechanical strength of the polarizing plate, and the like.

Referring to FIG. 6, a first optically functional layer 10 includes acicular particles 1 and a matrix 2. Here, the acicular particles 1 may be impregnated into the matrix 2.

The matrix 2 may have the same or different index of refraction than the anisotropic particles, for example, the acicular particles 1. For example, a small difference in index of refraction therebetween does not provide any problem, such as haze increase and the like. For example, a difference in index of refraction between the anisotropic particles, for example, the acicular particles, and the matrix (index of refraction of the anisotropic particles, for example, the acicular particles - index of refraction of the matrix) may be 0.5 or less, for example, 0, 0.05, 0.1, 0.15, 0.2, 0.25, 0.3, 0.35, 0.4, 0.45, 0.5, or 0.3 or less, for example, 0 to 0.2.

In one embodiment, the matrix 2 may be an adhesive layer or a non-adhesive layer.

The matrix 2 may be a cured product of a composition comprising a heat curable resin and/or an actinic radiation curable resin.

The heat curable resin is a resin capable of being cured by drying and/or heat treatment and may include a resin having, for example, a (meth)acrylate group, an epoxy group, a urethane group, a urethane (meth)acrylate group, and the like. For example, the heat curable resin may be a (meth)acrylic resin. The matrix formed of a composition comprising the heat curable resin may be an adhesive layer, without being limited thereto.

The actinic radiation curable resin is a resin capable of being cured by UV light and may include, for example, a resin having a photo-curable functional group. For example, the photo-curable functional group may include a vinyl group, a (meth)acrylate group, and the like, and the actinic radiation curable resin may include at least one photocurable group selected from among these photocurable groups. For example, the actinic radiation curable resin may be selected from among resins capable of realizing the effects of the present invention, such as a (meth)acrylate based resin, a urethane (meth)acrylate based resin, an epoxy (meth)acrylate based resin, a silicone (meth)acrylate based resin, and the like.

The composition may further include at least one initiator capable of curing the heat curable resin and/or the actinic radiation curable resin. For example, the initiator may be a heat initiator and/or a photoinitiator. The heat initiator may include azo, peroxide, and the like. The photoinitiator may be a photo-radical initiator, such as phosphorus, phosphine oxide, ketone, and cyclohexyl ketone-based photo-radical initiators.

The composition may further include a heat curable crosslinking agent and/or a photo-curable crosslinking agent. The heat curable crosslinking agent may be an isocyanate based crosslinking agent, an epoxy based crosslinking agent, an amine based crosslinking agent, or the like. The photo-curable crosslinking agent may be a polyfunctional photo-curable monomer having at least two photo-curable reactive groups.

The composition may further include typical additives in the art, for example, surface regulators, antistatic agents, dispersants, dyes, pigments, and the like.

In one embodiment, the first optically functional layer or the matrix may be an adhesive layer to allow the first optically functional layer to be directly stacked on a protective layer described below or on the polarizer without an interlayer adhesive. When the first optically functional layer or the matrix is formed of the composition comprising the actinic radiation curable resin, the first optically functional layer or the matrix becomes a non-adhesive layer. Thus, adhesives are used for adhesion of the first optically functional layer to the polarizer or the protective layer described below, thereby causing deterioration in light transmittance of the polarizing plate.

Next, a method for alignment of the anisotropic particles, for example, the acicular particles, in the first optically functional layer will be described.

The first optically functional layer may be formed by coating a composition for first optically functional layers onto an adherend, followed by curing the composition. Here, the average value and standard deviation of the orientation angles according to the present invention may be realized by adjusting viscosity of the composition for first optically functional layers. The average value and standard deviation of the orientation angles may also be realized by adjusting pressure or the like upon coating the composition.

When the composition for first optically functional layers has an excessively high viscosity, the acicular particles cannot be properly aligned during coating, or cannot reach the average value and standard deviation of the orientation angles according to the present invention, even if aligned. Accordingly, it is necessary for the composition for first optically functional layers to prevent excessive increase in viscosity. A desired viscosity may be changed according to the content and length of the acicular particles in the first optically functional layer, and the like.

In particular, when the first optically functional layer is an adhesive layer, the composition for first optically functional layers may essentially include an adhesive resin. Although viscosity of the composition for first optically functional layers is determined by various variables in the composition, the viscosity of the composition may be generally determined by, for example, the weight average molecular weight of the adhesive resin, which constitutes a main component of the composition in terms of solid content. **In** order to realize proper viscosity, the weight average molecular weight of the adhesive resin cannot be significantly increased, thereby causing decrease in hardness of the first optically functional layer. Accordingly, the matrix may have a glass transition temperature of -10°C or less, for example, -70°C, -65°C, -60°C, -55°C, -50°C, -45°C, -40°C, -35°C, -30°C, -25°C, -20°C, -10°C, -70°C to -10°C, or -70°C to -15°C, and a storage modulus at 25°C of $1 \times 10^{-3}$ to $9 \times 10^{-1}$ MPa, for example, $1 \times 10^{-3}$ MPa, $1 \times 10^{-2}$ MPa, $1 \times 10^{-1}$ MPa, or $9 \times 10^{-1}$ MPa.

The polarizing plate according to the present invention further includes the second optically functional layer on one surface, for example, a light exit surface, of the first optically functional layer satisfying the average value and standard deviation of the orientation angles of the present invention, as described below. The second optically functional layer may have different functions than the first optically functional layer.

In one embodiment, the second optically functional layer is a hardness-enhancing layer and provides good hardness to the polarizing plate. To improve hardness of the polarizing plate, a hard coating layer or a hard coating film may be stacked on an upper surface of the protective layer without the second optically functional layer described below. In this case, however, the polarizing plate can suffer from generation of curls due to significant thickness unevenness on both sides of the polarizer.

In one embodiment, the polarizing plate may have a hardness of 2H or more, for example, 2H to 4H, as measured in accordance with ASTM D3502. Within this range, the polarizing plate can have impact resistance to be used as a viewer-side polarizing plate.

In one embodiment, "curl" may be measured on a specimen, which is prepared by cutting the polarizing plate to a predetermined size, by measuring the maximum distance from the bottom to the specimen after placing the specimen such that the second optically functional layer is placed at the uppermost side from the bottom. A lower maximum distance indicates less curl generation. "Curl" may be measured after the specimen is left at room temperature (for example, at 23°C to 25°C), at high temperature (for example, at 60°C to 80°C), or at high temperature/humidity (for example, at 60°C to 80°C and 95% RH (relative humidity)) for a long period of time (for example, 100 to 500 hours).

The second optically functional layer may include a cured product of a composition for second optically functional layers comprising an actinic radiation curable resin. Accordingly, the second optically functional layer compensates for low hardness of the first optically functional layer to increase overall hardness of the polarizing plate. The second optically functional layer can be formed of a polymer resin as in a typical protective layer. In this case, however, the second optically functional layer formed of the polymer resin has lower hardness than a layer formed by curing the actinic radiation curable resin and thus requires increase in thickness.

The actinic radiation curable resin is a resin capable of being cured by UV light and may include, for example, a resin having a photo-curable functional group. For example, the photo-curable functional group may include a vinyl group, a (meth)acrylate group, and the like, and the actinic radiation curable resin may include at least one photocurable group selected from among these photocurable groups. For example, the actinic radiation curable resin may be selected from among resins capable of realizing the effects of the present invention, such as a (meth)acrylate based resin, a urethane (meth)acrylate based resin, an epoxy (meth)acrylate based resin, a silicone (meth)acrylate based resin, and the like.

The composition may further include a photoinitiator capable of curing at least one type of actinic radiation curable resin. For example, the photoinitiator may be a photo-cationic initiator, a photo-radical initiator, such as phosphorus, phosphine oxide, ketone, and cyclohexyl ketone-based photo-radical initiators, and the like.

The composition may further include typical additives known to those skilled in the art, for example, surface regulators, antistatic agents, dispersants, dyes, pigments, and the like.

The second optically functional layer is optically transparent and does not affect improvement in contrast ratio and/or visibility realized by the first optically functional layer. The second optically functional layer may have a light transmittance of 95% or more, for example, 95% to 100%. Within this range, the second optically functional layer does not affect the effects of the present invention.

The second optically functional layer may have the same index of refraction as or a different index of refraction than the matrix in the first optically functional layer. For example, a difference in index of refraction between the matrix and the second optically functional layer (index of refraction of the matrix in the first optically functional layer - index of refraction of the second optically functional layer) may be 0.1 or less, for example, 0, 0.01, 0.02, 0.03, 0.04, 0.05, 0.06, 0.07, 0.08, 0.09, 0.1, or 0 to 0.1. Within this range, the second optically functional layer does not provide problems, such as increase in haze due to difference in index of refraction, change in optical path at the interface, and the like.

The second optically functional layer may have an index of refraction of 1.3 to 1.6, for example, 1.3 to 1.5. Within this range, the first optically functional layer and the second optically functional layer can be easily manufactured.

The second optically functional layer may become an adhesive layer or a non-adhesive layer according to the composition for second optically functional layers comprising the actinic radiation curable resin.

The second optically functional layer may have the same thickness as or a different thickness than the first optically functional layer. For example, the second optically functional layer may have a smaller thickness than the first optically functional layer, thereby providing an effect of realizing thickness reduction.

In one embodiment, the second optically functional layer may have a thickness of 5 $\mu$m to 50 $\mu$m, for example, 5 $\mu$m to 20 $\mu$m, or 5 $\mu$m to 15 $\mu$m.

The second optically functional layer may be formed by coating the composition for second optically functional layers on one surface of an adherend, the protective layer or the first optically functional layer, followed by photocuring. The photocuring method and the coating method may be selected from typical methods known in the art.

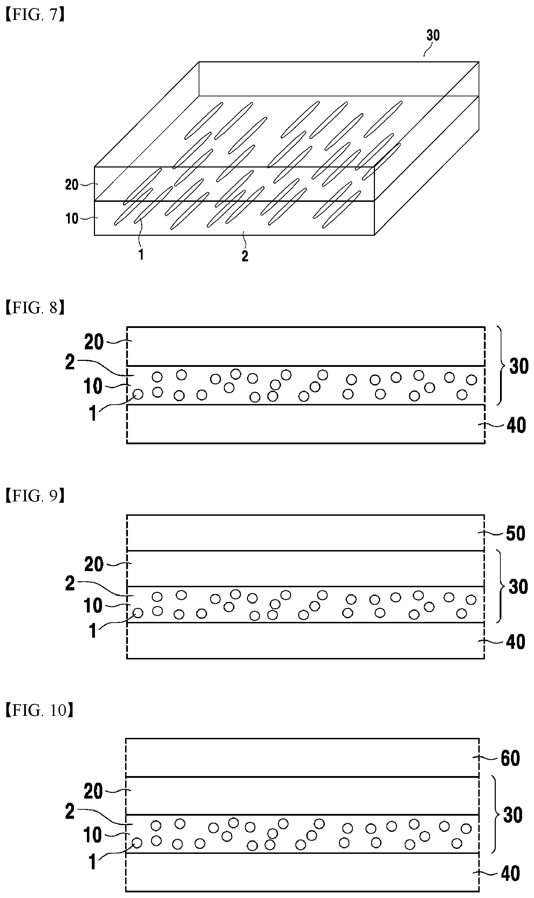

FIG. 7 is a perspective view of a first optically functional layer and a second optically functional layer according to one embodiment of the present invention.

Referring to FIG. 7, the first optically functional layer 10 includes the matrix 2 and the acicular particles 1, whereas the second optically functional layer 20 may not include inorganic particles or organic particles, such as the acicular particles 1 and the like.

Each of upper and lower surfaces of the second optically functional layer 20 may be a flat surface.

A laminate 30 of the first optically functional layer 10 and the second optically functional layer 20 has a light transmittance of 95% or more, for example, 96% to 100%. Within this range, the laminate can be used in a viewer-side polarizing plate.

**Polarizing plate**

The polarizing plate may further include one or more polarizers, protective layers (including a retardation layer), adhesive layers bonding layers, and/or functional films (functional coating layer), and the like in addition to the first optically functional layer and the second optically functional layer.

(i) Polarizer

The polarizer is a linear light absorption type polarizer and may provide a polarization function by allowing a light component traveling in one direction to pass therethrough while absorbing a light component perpendicular to the one direction among light incident thereon.

The polarizer may be a polarizer fabricated by dyeing and stretching a polyvinyl alcohol (PVA) film or a polyene-based polarizer fabricated by dehydration of the polyvinyl alcohol film.

The polarizer may have a thickness of 50 $\mu$m or less, for example, 5 $\mu$m to 30 $\mu$m. Within this range, a film for the polarizer does not suffer from melting and fracture upon stretching of the film.

(ii) Protective layer

The protective layer may be provided to the polarizing plate to protect the polarizer or to increase mechanical strength of the polarizing plate. The protective layer may be an adherend for forming an optically functional layer.

The protective layer may include a transparent base. The transparent base may have a higher or lower index of refraction than the optically functional layer. For example, the transparent base may have a higher index of refraction than the optically functional layer. With this structure, the protective layer can assist in improvement in contrast ratio and brightness.

The transparent base may include an optically transparent resin film having a light incidence surface and a light exit surface facing the light incidence surface. The transparent base may be composed of a single layer of a resin film or multiple resin layers stacked one above another. The resin may include at least one selected from among a cellulose ester resin including triacetylcellulose (TAC) and the like, a cyclic polyolefin resin including an amorphous cyclic olefin polymer (COP) and the like, a polycarbonate resin, a polyester resin including polyethylene terephthalate (PET) and the like, a polyether sulfone resin, a polysulfone resin, a polyamide resin, a polyimide resin, a non-cyclic polyolefin resin, a polyacrylate resin including poly(methyl methacrylate) and the like, a polyvinyl alcohol resin, a polyvinyl chloride resin, and a polyvinylidene chloride resin, without being limited thereto. For example, the transparent base includes a polyester resin including polyethylene terephthalate (PET) and the like to further improve contrast ratio and brightness.

The transparent base may have a haze of 30% or less, for example, 2% to 30%, and a light transmittance of 90% or more, for example, 95% to 100%. Within this range, the transparent base can be used in the polarizing plate.

The transparent base may have a thickness of 5 $\mu$m to 200 $\mu$m, for example 30 $\mu$m to 120 $\mu$m. Within this range, the transparent base can be used in the polarizing plate.

The protective layer may further include a functional coating layer stacked on at least one surface of the transparent base. The functional coating layer may include at least one selected from among a primer layer, an antiglare layer, an antireflection layer, a low reflectivity layer, a high reflectivity layer, a hard coating layer, an anti-fingerprint layer, and the like.

The protective layer may be an isotropic film providing substantially no phase retardation, or may have a predetermined range of in-plane retardation to provide an additional function when combined with the polarizing plate.

In one embodiment, the protective layer may have an in-plane retardation of 3,000 nm or more at a wavelength of 550 nm. Within this range, the protective layer can assist in improvement in contrast ratio and/or brightness when combined with the optically functional layer. In other embodiments, the protective layer may have an in-plane retardation of 4,000 nm or more, 8,000 nm or more, for example, 10,000 nm or more, greater than 10,000 nm, 10,100 nm to 30,000 nm, or 10,100 nm to 15,000 nm, at a wavelength of 550 nm.

In another embodiment, the protective layer may have an in-plane retardation of less than 3,000 nm at a wavelength of 550 nm. For example, the protective layer may have an in-plane retardation of 0 nm to 1,000 nm, for example, 10 nm to 500 nm, at a wavelength of 550 nm.

The protective layer may be a first protective layer, a second protective layer, a third protective layer, or the like.

(iii) Adhesive layer and/or bonding layer

The adhesive layer and/or the bonding layer may adhesively attach or bond the polarizer, the optically functional layer, the protective layer, and a functional layer to one another.

The adhesive layer may be formed of a typical composition known to those skilled in the art. For example, the adhesive layer may be a (meth)acrylic adhesive layer, an epoxy-based adhesive layer, a silicone-based adhesive layer, a urethane-based adhesive layer, an epoxy (meth)acrylic adhesive layer, or a urethane (meth)acrylic adhesive layer. By way of example, the adhesive layer may be a pressure sensitive adhesive (PSA) layer.

The bonding layer may be formed of a typical composition known to those skilled in the art. For example, the bonding layer may be formed of a water-based bonding agent, a photo-curable bonding agent, and the like.

(iv) Functional layer

Although the polarizing plate may omit a functional layer, the functional layer may provide an additional function to the polarizing plate.

The functional layer and the functional coating layer may be an anti-glare film, an antireflection film, an ultra-low reflectivity film, a low reflectivity film, a high reflectivity film, or an anti-fingerprint film.

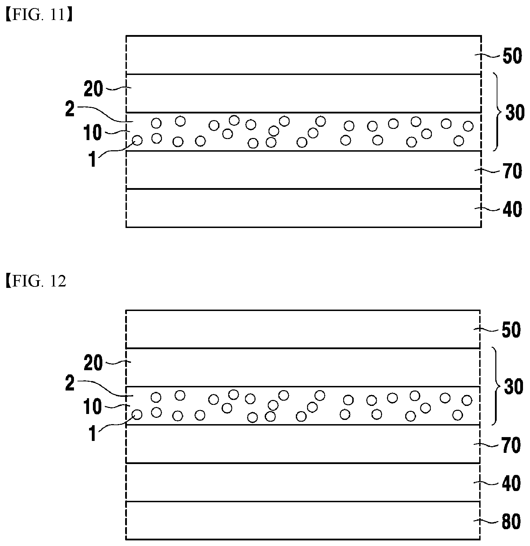

FIG. 8 to FIG. 12 are sectional views of polarizing plates according to embodiments of the present invention.

The polarizing plate may include: a polarizer 40; and a first optically functional layer 10 and a second optically functional layer 20 sequentially stacked in the stated order on a light exit surface of the polarizer 40.

The polarizing plate may include: a polarizer 40; and a first optically functional layer 10, a second optically functional layer 20 and a first protective layer 50 sequentially stacked in the stated order on a light exit surface of the polarizer 40.

The polarizing plate may include: a polarizer 40; and a first optically functional layer 10, a second optically functional layer 20 and a functional coating layer 60 sequentially stacked in the stated order on a light exit surface of the polarizer 40.

The polarizing plate may include: a polarizer 40; and a second protective layer 70, a first optically functional layer 10, a second optically functional layer 20 and a first protective layer 50 sequentially stacked in the stated order on a light exit surface of the polarizer 40.

The polarizing plate may include: a polarizer 40; a second protective layer 70, a first optically functional layer 10, a second optically functional layer 20 and a first protective layer 50 sequentially stacked in the stated order on a light exit surface of the polarizer 40; and a third protective layer 80 stacked on a light incidence surface thereof.

Although not shown in FIG. 7 to FIG. 11, the second optically functional layer may further include the acicular particles described above. In one embodiment, the acicular particles may be aligned in the second optically functional layer in the in-plane direction thereof, and orientation angles and the standard deviation of the orientation angles may be adjusted within the ranges of the average value and standard deviation of the orientation angles in the first optically functional layer.

The layers of the polarizing plate may be bonded to each other via an adhesive layer, a bonding layer, or the like.

An optical display apparatus according to the present invention includes the polarizing plate according to the present invention.

In one embodiment, the optical display apparatus may include the polarizing plate according to the present invention as a viewer-side polarizing plate with respect to a liquid crystal panel. Here, the viewer-side polarizing plate refers to a polarizing plate disposed to face a screen with respect to the liquid crystal panel, that is, to face a light source thereof.

In one embodiment, a liquid crystal display may include a light-collecting backlight unit, a light source-side polarizing plate, a liquid crystal panel, and a viewer-side polarizing plate sequentially stacked in the stated order, in which the viewer-side polarizing plate includes the polarizing plate according to the present invention. The light source-side polarizing plate refers to a polarizing plate at a light source side. The liquid crystal panel may adopt a vertical alignment (VA) mode, an IPS mode, a patterned vertical alignment (PVA) mode, or a super-patterned vertical alignment (S-PVA) mode, without being limited thereto.

The optical display apparatus may be a foldable or flexible optical display apparatus or a non-foldable or non-flexible optical display apparatus.

[Mode for Invention]

Next, the present invention will be described in more detail with reference to some examples. However, it should be noted that these examples are provided for illustration only and are not to be construed in any way as limiting the present invention.

**Example 1**

(1) A mixture of $CaCO_3$ particles (acicular anisotropic microparticles, length: 10 $\mu$m to 30 $\mu$m, cross-section diameter:

0.5 $\mu$m to 2.0 $\mu$m, index of refraction: 1.68, Whiscal A, Maruo Calcium Co., Ltd.) was prepared and added to a methyl ethyl ketone solution containing KBM503 (3-methacryloxypropyltrimethoxysilane), followed by reaction at room temperature. Next, the resulting product was dried in an oven at 90°C to remove a solvent, followed by surface treatment with 3-methacryloxypropyltrimethoxysilane, thereby preparing a mixture of $CaCO_3$ acicular particles.

Methyl ethyl ketone and the surface-modified $CaCO_3$ particles were added to an adhesive resin (Saiden Co., Ltd.), which in turn was stirred using a homogenizer for 4 hours. Then, relative to 100 parts by weight of the adhesive resin, 0.2 parts by weight of isophorone diisocyanate was added to the resulting product, which in turn was stirred at 500 rpm for 15 min, thereby preparing a composition for first optically functional layers (viscosity: 1,050 cP at 25°C) containing the surface-modified $CaCO_3$ particles.

(2) A polarizer (thickness: 13 $\mu$m, light transmittance: 44%) was prepared by stretching a polyvinyl alcohol film to 3 times an initial length thereof at 60°C, dyeing the stretched film with iodine, and stretching the film to 2.5 times in an aqueous solution of boric acid at 40°C.

(3) A polyethylene terephthalate (PET) film (DSG-17(Z)PET80, DNP) and a cyclic olefin polymer (COP) were bonded to upper and lower surfaces of the prepared polarizer via a bonding agent, respectively. The composition for first optically functional layers was coated to a thickness of 20 $\mu$m on an upper surface of the PET film using a coating bar and subjected to heat curing at 90°C for 1 hour, thereby forming a first optically functional layer (adhesive layer, matrix glass transition temperature: -61°C, matrix storage modulus: 7 x $10^{-2}$ MPa, thickness: 20 $\mu$m, refractive index of matrix: 1.46). In the first optically functional layer, $CaCO_3$ acicular particles were aligned at orientation angles having an average value of +1.6° and a standard deviation of 7.2°.

(4) A second optically functional layer (index of refraction: 1.46, thickness: 10 $\mu$m) was formed by depositing a composition containing an actinic radiation curable resin (SSC-4540P, Shin-A T&C) to a predetermined thickness on a lower surface of a PET film (in-plane retardation at 550 nm: 8,000 nm, with a low refractivity layer formed on an upper surface thereof, DSG-17(Z)PET80, DNP), followed by photocuring.

(5) The first optically functional layer prepared in (3) was bonded to the second optically functional layer prepared in (4), thereby preparing a polarizing plate in which the PET film, the second optically functional layer, the first optically functional layer, the PET film, the polarizer, and the COP film are sequentially stacked in the stated order.

**Example 2**

A polarizing plate including a PET film, a second optically functional layer, a first optically functional layer, a PET film, a polarizer and a COP film sequentially stacked in the stated order was fabricated in the same manner as in Example 1 except that the average value and standard deviation of the orientation angles of the acicular particles were changed by changing the viscosity and coating pressure of the composition for first optically functional layers through change of the content of the acicular particles.

**Example 3**

A polarizing plate including a PET film, a second optically functional layer, a first optically functional layer, a PET film, a polarizer and a COP film sequentially stacked in the stated order was fabricated in the same manner as in Example 1 except that the average value and standard deviation of the orientation angles of the acicular particles were changed by changing the viscosity and coating pressure of the composition for first optically functional layers through change of the content of the acicular particles.

**Comparative Example 1**

A polarizing plate including a PET film, a second optically functional layer, a first optically functional layer, a PET film, a polarizer and a COP film sequentially stacked in the stated order was fabricated in the same manner as in Example 1 except that the average value and standard deviation of the orientation angles of the acicular particles were changed by changing the viscosity and coating pressure of the composition for first optically functional layers.

**Comparative Example 2**

A polarizing plate including a PET film, a second optically functional layer, a first optically functional layer, a PET film, a polarizer and a COP film sequentially stacked in the stated order was fabricated in the same manner as in Example 1 except that the average value and standard deviation of the orientation angles of the acicular particles were changed by changing the coating pressure of the composition for first optically functional layers.

**Comparative Example 3**

A polarizing plate including a PET film, a first optically functional layer, a PET film, a polarizer and a COP film sequentially stacked in the stated order was fabricated in the same manner as in Example 1 except that the second optically functional layer was not formed.

**Comparative Example 4**

A polarizing plate including a PET film, a layer formed of a heat curable resin-containing composition, a first optically functional layer, a PET film, a polarizer and a COP film sequentially stacked in the stated order was fabricated in the same manner as in Example 1 except that an adhesive resin (SAIDEN, heat curable adhesive resin) was used instead of the actinic radiation curable resin-containing composition upon formation of the second optically functional layer.

**Reference Example 1**

A polarizing plate including a PET film, a polarizer and a COP film sequentially stacked in the stated order without a first optically functional layer and a second optically functional layer was prepared with reference to Example 1.

<Measurement of glass transition temperature and storage modulus of matrix>

A matrix was prepared by curing a heat curable composition containing a (meth)acrylic adhesive resin used in Examples and Comparative Examples (free from surface-modified $CaCO_3$ particles) in the same manner. A glass transition temperature of the matrix was measured on 15 mg of the matrix (on a 6 mm Al Pan) using a Discovery (TA Instruments Inc.) by heating the matrix to 180°C at 20°C/min in a nitrogen atmosphere (50 mL/min), cooling the matrix to -100°C, and heating the matrix to 100°C at 10°C/min. The matrix had a glass transition temperature of -61°C.

A matrix was formed on a release film by depositing a heat curable composition containing a (meth)acrylic adhesive resin used in Examples and Comparative Examples (free from surface-modified $CaCO_3$ particles) to have a post-drying thickness of 50 $\mu$m on the release film, followed by drying at 95°C for 4 min. Then, a specimen was prepared by stacking multiple matrices to a thickness of 500 $\mu$m and cutting a laminate of the matrices into a circular specimen having a diameter of 8 mm, and storage modulus was measured at 25°C on the specimen using a storage modulus meter (ARES, Advanced Rheometry Expansion System, TA instrument Inc.) while raising the temperature from 0°C to 100°C (at 10°C/min). The specimen had a storage modulus at 25°C of 7 x $10^{-2}$ MPa.

A model for measurement of viewing angle was fabricated using each of the polarizing plates fabricated in Examples and Comparative Examples and was evaluated as to properties shown in Table 1.

After removing a viewer-side polarizing plate from a liquid crystal panel model (55" UN55KS8000F, Samsung Electronics Co., Ltd.), each of the polarizing plates fabricated in Examples and Comparative Examples was attached as a viewer-side polarizing plate to the model to fabricate the model for measurement of viewing angle. In the model for measurement of viewing angle, a light source-side polarizing plate includes a COP film, a polarizer, and a PET film sequentially stacked on a liquid crystal panel.

The following properties were evaluated and results are shown in Table 1.

(1) Average value and standard deviation of orientation angles: A surface image of each of the optically functional layers formed in Examples and Comparative Examples was captured using an optical microscope (Olympus MX61L, magnification: 500× (10×50)) and adjusted in height to be focused on the surface of the optically functional layer, followed by executing the FIJI program (Method: Fourier Components, N bis: 90°, histogram start: 0°, histogram end: 180°), thereby obtaining an average value and a standard deviation of the orientation angles of the acicular particles in the optically functional layer.

(2) Relative contrast (unit: %): A liquid crystal display (having the same configuration as Samsung TV (55", Model: UN55KS8000F) except for the configuration of the liquid crystal display module of Examples and Comparative Examples) including a one-side edge type LED light source was fabricated by assembling an LED light source, a light guide plate, and a model for measurement of viewing angle. Contrast ratios at a front side (0°, 0°) and a lateral side (0°, 60°) were measured in the spherical coordinate system using an EZCONTRAST X88RC (EZXL-176R-F422A4, ELDIM S.A.). The contrast ratio was calculated by a ratio of brightness in a white mode to brightness in a black mode. In addition, relative contrast ratio was calculated according to Formula: Relative contrast = {(contrast ratio of each of the liquid crystal displays of Examples, Comparative Examples, and Reference Example 1)/(contrast ratio of Reference Example 1)}×100.

(3) Pencil hardness: Each of the polarizing plates fabricated in Examples and Comparative Examples was attached to a glass plate, followed by measurement of pencil hardness on the outermost surface thereof using a pencil hardness tester (CT-PC2, Core Technology Co., Ltd.) in accordance with ASTM D3502. When a specimen suffered from generation of scratches 3 times or more upon scratching 5 times under a load of 200g at an angle of 45° while increasing pencil hardness, it was determined that scratches were generated at the corresponding pencil hardness. When an initial pencil hardness causing generation of scratches on a specimen is 3H, the specimen had a pencil hardness of 2H. When an initial pencil hardness causing generation of scratches on a specimen is 3H, the specimen had a pencil hardness of H.

(4) Light transmittance of polarizing plate (unit: %): Light transmittance of each of the polarizing plates prepared in Examples and Comparative Examples was measured using a light transmittance meter (Spectrometer).

[Table 1]

| | | Reference Example | Example | | | Comparative Example | | | |
|---|---|---|---|---|---|---|---|---|---|
| | | 1 | 1 | 2 | 3 | 1 | 2 | 3 | 4 |
| Orientation angle | Average | - | +1.6° | -1.3° | -2.1° | +90° | -2.1° | +1.6° | +1.6° |
| | Standard deviation | - | 7.2° | 6.4° | 7.1° | 8.1° | 21.6° | 7.2° | 7.2° |
| Particle content (wt%) | | - | 4.7 | 4.4 | 5.1 | 4.7 | 4.7 | 4.7 | 4.7 |
| Second optically functional layer | | - | UV curable | UV curable | UV curable | UV curable | UV curable | Not present | Heat curable |
| Contrast ratio (%) | Front | 100 | 48 | 50 | 45 | 49 | 60 | 49 | 50 |
| | Lateral | 100 | 140 | 133 | 147 | 63 | 104 | 139 | 139 |
| Light transmittance (%) | | - | 97 | 97 | 96 | 94 | 96 | 97 | 96 |
| Pencil hardness | | - | 2H | 2H | 2H | 2H | 2H | 1H | 1H |
| * Particle content: The content of acicular particles ($CaCO_3$) in the second optically functional layer | | | | | | | | | |

As shown in Table 1, the polarizing plates according to the present invention exhibited good improvement in visibility and good hardness even without a pattern, for example, a visibility-enhancing pattern. In addition, although not shown in Table 1, the polarizing plates according to the present invention could suppress generation of curls.

Conversely, the polarizing plates of Comparative Examples 1 to 4 did not provide all effects of the present invention.

It should be understood that various modifications, changes, alterations, and equivalent embodiments can be made by those skilled in the art without departing from the spirit and scope of the invention.

**Claims**

1. A polarizing plate comprising: a polarizer; and a first optically functional layer and a second optically functional layer sequentially stacked in the stated order on one surface of the polarizer,

   wherein the first optically functional layer comprises anisotropic particles comprising acicular particles, the acicular particles being aligned in an in-plane direction of the first optically functional layer;
   assuming that a light absorption axis of the polarizer is 0°, orientation angles of the acicular particles defined between longitudinal directions of the acicular particles and the light absorption axis of the polarizer have an average value of -10° to +10° and a standard deviation of 15° or less; and
   the second optically functional layer comprises a cured product of a composition comprising an actinic radiation curable resin.

2. The polarizing plate according to claim 1, wherein the first optically functional layer is a contrast ratio or brightness-enhancing layer.

3. The polarizing plate according to claim 1, wherein each of upper and lower surfaces of the second optically functional layer is a flat surface.

4. The polarizing plate according to claim 1, wherein the acicular particles are acicular microparticles.

5. The polarizing plate according to claim 1, wherein the acicular particles are formed of at least one selected from among titanium oxide, zirconium oxide, zinc oxide, calcium carbonate, Boehmite, aluminum borate, calcium silicate, magnesium sulfate, magnesium sulfate hydrate, and potassium titanate.

6. The polarizing plate according to claim 1, wherein the acicular particles have an average aspect ratio of 5 to 60.

7. The polarizing plate according to claim 1, wherein the acicular particles are present in an amount of 1 wt% to 30 wt% in the first optically functional layer.

8. The polarizing plate according to claim 1, wherein the first optically functional layer comprises a matrix impregnated with the acicular particles.

9. The polarizing plate according to claim 8, wherein the matrix is an adhesive or non-adhesive matrix.

10. The polarizing plate according to claim 8, wherein the matrix has a glass transition temperature of -10°C or less and a storage modulus of $1 \times 10^{-3}$ MPa to $9 \times 10^{-1}$ MPa at 25°C.

11. The polarizing plate according to claim 1, wherein the actinic radiation curable resin comprises a vinyl group or (meth) acrylate group-containing resin.

12. The polarizing plate according to claim 1, wherein a difference in index of refraction between the matrix in the first optically functional layer and the second optically functional layer (index of refraction of the matrix in the first optically functional layer - index of refraction of the second optically functional layer) is 0.1 or less.

13. The polarizing plate according to claim 1, wherein the second optically functional layer has a smaller thickness than the first optically functional layer.

14. The polarizing plate according to claim 1, wherein the polarizing plate comprises at least one selected from among a protective layer, an adhesive layer, a bonding layer, a functional layer, and a functional coating layer.

15. The polarizing plate according to claim 14, wherein each of the functional film and the functional coating layer is an anti-glare layer, an anti-reflection layer, an ultra-low reflectivity layer, a low refractivity layer, a high refractivity layer, or an anti-fingerprint layer.

16. An optical display apparatus comprising the polarizing plate according to any one of claims 1 to 15.

【FIG. 1】

【FIG. 2】

【FIG. 3】

【FIG. 4】

【FIG. 5】

【FIG. 6】

【FIG. 7】

【FIG. 8】

【FIG. 9】

【FIG. 10】

【FIG. 11】

【FIG. 12

## INTERNATIONAL SEARCH REPORT

| International application No. |
| --- |
| **PCT/KR2023/020744** |

| A. | CLASSIFICATION OF SUBJECT MATTER |
| --- | --- |

**G02B 5/30**(2006.01)i; **G02F 1/1335**(2006.01)i; **G09F 9/30**(2006.01)i; **G02B 1/02**(2006.01)i; **G02B 1/11**(2006.01)i; **G02B 1/18**(2015.01)i; **G02B 1/14**(2015.01)i

According to International Patent Classification (IPC) or to both national classification and IPC

| B. | FIELDS SEARCHED |
| --- | --- |

Minimum documentation searched (classification system followed by classification symbols)

G02B 5/30(2006.01); C08J 5/18(2006.01); G02B 5/18(2006.01); G02F 1/1335(2006.01); G02F 1/13363(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 편광판(polarizing plate), 이방성 입자(anisotropic particle), 배향 각도(orientation angle), 광 경화형 수지(photo-curable resin)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2010-139585 A (KONICA MINOLTA OPTO INC.) 24 June 2010 (2010-06-24)<br>See paragraphs [0023]-[0058] and [0116]-[0117], claims 1-2 and 7-8 and figure 1. | 1-16 |
| Y | WO 2020-022500 A1 (FUJIFILM CORPORATION) 30 January 2020 (2020-01-30)<br>See paragraphs [0057]-[0060] and figures 2 and 10. | 1-16 |
| Y | KR 10-2005-0074610 A (TOMOEGAWA PAPER CO., LTD.) 18 July 2005 (2005-07-18)<br>See paragraphs [0036] and [0059]-[0070] and figures 1-4b. | 4-10 |
| A | KR 10-2017-0097319 A (LG ELECTRONICS INC.) 28 August 2017 (2017-08-28)<br>See paragraph [0022] and figure 6. | 1-16 |
| A | KR 10-2008-0005431 A (NITTO DENKO CORPORATION) 11 January 2008 (2008-01-11)<br>See paragraphs [0167]-[0176] and figure 3. | 1-16 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 March 2024** | **02 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/020744**

| Patent document cited in search report | | | Publication date (day/month/year) | Patent family member(s) | | | Publication date (day/month/year) |
|---|---|---|---|---|---|---|---|
| JP | 2010-139585 | A | 24 June 2010 | None | | | |
| WO | 2020-022500 | A1 | 30 January 2020 | US | 11815706 | B2 | 14 November 2023 |
| | | | | US | 2021-0149095 | A1 | 20 May 2021 |
| KR | 10-2005-0074610 | A | 18 July 2005 | JP | 2004-212916 | A | 29 July 2004 |
| | | | | JP | 2004-258105 | A | 16 September 2004 |
| | | | | JP | 4297696 | B2 | 15 July 2009 |
| | | | | US | 2006-0014085 | A1 | 19 January 2006 |
| | | | | WO | 2004-044629 | A1 | 27 May 2004 |
| KR | 10-2017-0097319 | A | 28 August 2017 | None | | | |
| KR | 10-2008-0005431 | A | 11 January 2008 | CN | 1748159 | A | 15 March 2006 |
| | | | | JP | 2004-264345 | A | 24 September 2004 |
| | | | | KR | 10-0801912 | B1 | 12 February 2008 |
| | | | | KR | 10-2005-0084525 | A | 26 August 2005 |
| | | | | US | 2006-0192913 | A1 | 31 August 2006 |
| | | | | WO | 2004-070439 | A1 | 19 August 2004 |

Form PCT/ISA/210 (patent family annex) (July 2022)

**EP 4 625 007 A1**

**Patent documents cited in the description**

- KR 1020180047569